# EUROPEAN PATENT SPECIFICATION

(11) **EP 1 413 143 B1**
(45) Date of publication and mention of the grant of the patent: **03.05.2006**
(21) Application number: 02743521.3
(22) Date of filing: 02.07.2002
(51) Int. Cl.: H04N 7/26, G06T 1/00, H04N 1/32

(54) **PROCESSING A COMPRESSED MEDIA SIGNAL**
VERARBEITUNG VON EINEM KOMPRIMIERTEN MEDIENSIGNAL
TRAITEMENT D'UN SIGNAL MEDIA COMPRESS

(30) Priority: 19.07.2001 EP 01202767
(43) Date of publication of application: 28.04.2004
(73) Proprietor: Koninklijke Philips Electronics N.V., 5621 BA Eindhoven (NL)
(72) Inventor: STEENHOF, Frits, A., NL-5656 AA Eindhoven (NL); LANGELAAR, Gerrit, C., NL-5656 AA Eindhoven (NL)
(74) Representative: van der Veer, Johannis Leendert
(86) International application number: PCT/IB2002/002737
(87) International publication number: WO 2003/009602

(56) References cited:
- WO-A-99/63505
- US-A- 5 809 139
- US-A- 5 847 767
- HARTUNG F ET AL: "Digital watermarking of MPEG-2 coded video in the bitstream domain" ACOUSTICS, SPEECH, AND SIGNAL PROCESSING, 1997. ICASSP-97., 1997 IEEE INTERNATIONAL CONFERENCE ON MUNICH, GERMANY 21-24 APRIL 1997, LOS ALAMITOS, CA, USA,IEEE COMPUT. SOC, US, 21 April 1997 (1997-04-21), pages 2621-2624, XP010225693 ISBN: 0-8186-7919-0 cited in the application
- ELY, S.R.: "MPEG VIDEO CODING, A SIMPLE INTRODUCTION" EBU TECHNICAL REVIEW, December 1995 (1995-12), pages 12-23, XP001106817

## Description

### FIELD OF THE INVENTION

The invention relates to a method and arrangement for processing a compressed media signal in which samples of said media signal are represented by variable-length code words according to a first coding rule, the method comprising the steps of:
decoding selected variable-length code words into respective selected signal samples;
modifying said selected signal samples in accordance with a given signal processing algorithm; and encoding the modified signal samples into modified variable-length code words according to said first coding rule; testing whether said step of encoding decreases the bit rate of the compressed media signal.

The invention relates particularly to the process of embedding a watermark in an MPEG-encoded video signal, in which the signal samples are DCT coefficients.

Such a method is known from WO-A-9963505.

Another known method of embodiment a watermark in a compressed media signal is disclosed in F. Hartung and B. Girod: "Digital Watermarking of MPEG-2 Coded Video in the Bitstream Domain", published in ICASSP, Vol. 4, 1997, pp. 2621-2624. In this prior art publication the media signal is a video signal the signal samples of which are DCT coefficients obtained by subjecting the image pixels to a Discrete Cosine Transform. The watermark is a DCT transformed pseudo-noise sequence. The watermark is embedded by adding the DCT transformed noise sequence to the corresponding DCT coefficients The zero coefficients of the MPEG-coded signal are hot affected.

A problem of the prior art watermark embedding scheme is that modification of DCT coefficients in an already compressed bit stream changes the bit rate because the DCT coefficients are represented by variable-length code words. An increased bit rate is usually not acceptable. The prior art embedder therefore checks whether transmission of the watermarked coefficient increases the bit rate, and transmits the original coefficient in that case. But also reduction of the bit rate is not desired. In MPEG systems, for example, a change of the bit rate may result in overflow or underflow of buffers in the decoder, and change the position of timing information in the bit stream.

In the method that is described by WO-A-9963505, zeroes are padded into the slices that have become shorter by the modifying step, in order to keep the bit rate constant. Also the padding of zeroes however has certain drawbacks.

### OBJECT AND SUMMARY OF THE INVENTION

It is an object of the invention to provide a method of embedding a watermark which alleviates the above-mentioned drawbacks.

To this end, the method in accordance with the invention is characterized in that of the result of the testing is affirmative, the method includes the step of re-encoding a signal sample into a longer code word according to a second coding rule. Said re-encoding into longer code words compensates for the reduction of bit rate caused by the watermarking process. The signal sample being re-encoded is preferably but not necessarily the modified signal sample.

In order to be able to decode the compressed signal, a decoder must know the second coding rule. To this end, the second coding rule can be conveyed in the bit stream. However, the invention is advantageously used in combination with compression standards that already provide such a second coding rule. The MPEG video compression standard is an example thereof The MPEG standard provides variable-length code words for frequently occurring combinations (pairs) of runs of zero DCT coefficients and a preceding or succeeding non-zero DCT coefficient. For statistically rare run/level pairs, MPEG defines an "Escape coding"method which provides a relatively long fixed-length code word. A preferred embodiment of the invention exploits the insight that MPEG's Escape coding rule may be applied to any run/level pair.

The invention is particularly advantageous if the watermarking process modifies the second value (i.e. a non-zero DCT coefficient) of run/level pair into the first value (i.e. a zero DCT coefficient). Such a watermarking process is proposed in Applicant's non-published earlier European patent application 01200277.0 (Attorney's docket PHNL0 10062). It causes a run/level pair to be modified into a run of zeroes, which is subsequently merged with the run of a succeeding or preceding run/level pair. This reduces the bit rate considerably and jusfiftes re-encoding of the new run/level pair in accordance with the second coding rule so as to compensate for the reduction of bit rate

The invention also relates to an arrangement for processing a compressed media signal in accordance with claim 9.

### BRIEF SUMMARY OF THE DRAWINGS

Fig. 1 shows schematically an arrangement for carrying out the method in accordance with the invention.
Figs. 2A-2C and 3A-3C show diagrams to illustrate the operation of the arrangement which is shown in Fig. 1.
Fig. 4 shows a flow chart of operations performed by a bit rate control processor which is shown in Fig. 1.

### DESCRIPTION OF A PREFERRED EMBODIMENT

Although the invention is neither restricted to video signals nor to a particular compression standard it will now be described with reference to an arrangement for embedding a watermark in a video signal which is compressed in accordance with the MPEG2 standard. Note that the compressed signal may already have an embedded watermark. In that case, an additional watermark is embedded in the signal. This process of watermarking an already watermarked signal is usually referred to as "remarking".

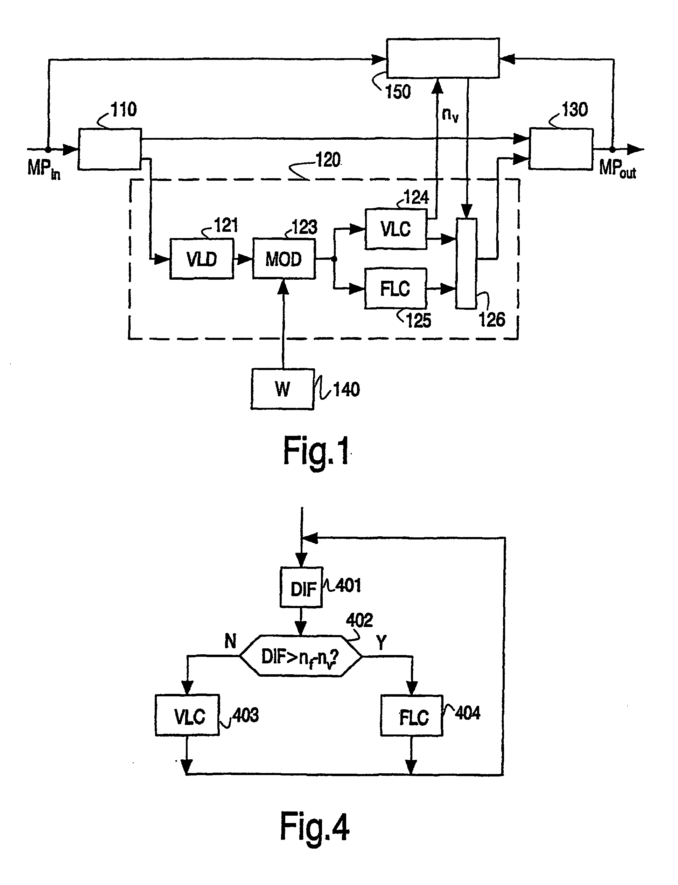

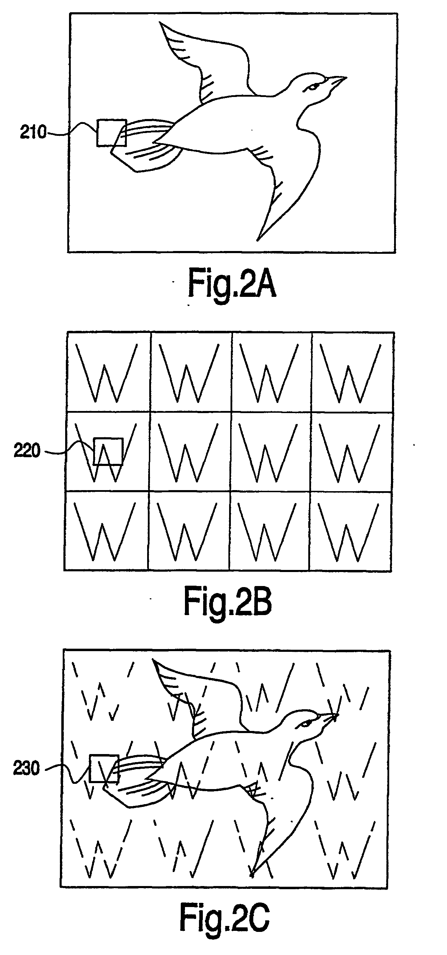

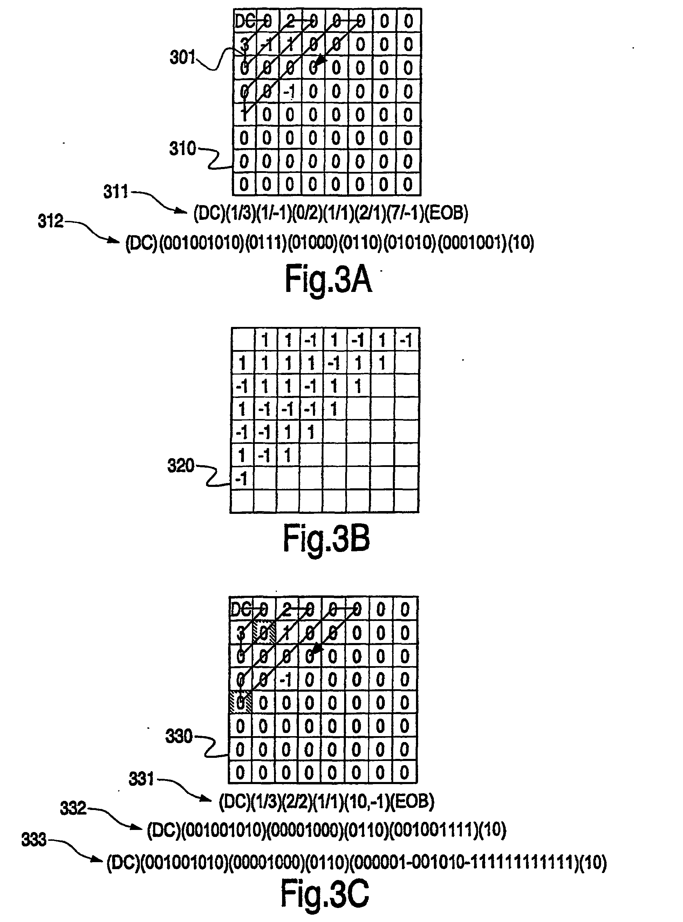

Fig. 1 shows a schematic diagram of an arrangement carrying out a preferred embodiment of the method according to the invention. The arrangement comprises a parsing unit **110,** a VLC processing unit **120,** an output stage **130,** a watermark buffer **140,** and a bit rate control processor **150.** The operation of the arrangement will be described with reference to Figs. 2A-2C and 3A-3C.

The arrangement receives an MPEG video stream MPᵢₙ which represents a sequence of video images. One such video image is shown in Fig. 2A by way of illustrative example. The video images are divided into blocks of 8×8 pixels, one of which is denoted **210** in Fig. 2A. The pixel blocks are represented by respective blocks of 8×8 DCT coefficients. The upper left transform coefficient of such a DCT block represents the average luminance of the corresponding pixel block and is commonly referred to as the DC coefficient The other coefficients represent spatial frequencies and are referred to as AC coefficients. The upper left AC coefficients represent coarse details of the image, the lower right coefficients represent fine details. The AC coefficients are quantized. This quantization process causes many AC coefficients of a DCT block to assume the value zero. Fig. 3A shows a typical example of a DCT block **310** representing image block **210** in Fig. 2A.

The coefficients of the DCT block have been sequentially scanned in accordance with a zigzag pattern (**301** in Fig. 3A) and variable-length encoded. The variable-length encoding scheme is a combination of Huffman coding and nm-length coding. More particularly, each run of zero AC coefficients and a subsequent non-zero AC coefficient constitutes a run/level pair which is encoded into a single variable length code word. Reference numeral **311** in Fig. 3A shows the series of run/level pairs representing DCT block **310.** An End-Of-Block code (BOB) denotes the absence of further non-zero coefficients in the DCT block. Reference numeral **312** in Fig. 3A shows the corresponding variable-length code words in accordance with the MPEG2 video compression standard.

In an MPEG2 video stream, four such DCT luminance blocks and two DCT chrominance blocks constitute a macroblock, a number of macroblocks constitutes a slice, a number of slices constitutes a picture (field or frame), and a series of pictures constitutes a video sequence. Some pictures are autonomously encoded (1-pictures), other pictures are predictively encoded with motion compensation (P and P-pictures). In the latter case, the DCT coefficients represent differences between pixels of the current picture and pixels of a reference picture rather than the pixels themselves.

The MPEG2 video stream MPᵢₙ is applied to the parsing unit **110** (Fig. 1). This parsing unit partially interprets the MPEG bit stream and splits the stream into variable-length code words representing luminance DCT coefficients (hereinafter: VLCs) and other MPEG codes. The unit also gathers information such as: the coordinates of the blocks, the coding type (field or fiame), the scan type (zigzag or alternate). The VLCs and associated information are applied to the VLC processing unit **120.** The other MPEG codes are directly applied to the output stage **130.**

The watermark to be embedded is a pseudo-random noise sequence in the pixel domain. In this embodiment of the arrangement, a 128×128 basic watermark pattern is "tiled" over the extent of the image. This tiling operation is illustrated in Fig. 2B. The 128×128 basic pseudo-random watermark pattern is herein shown as a symbol W for better visualization. The spatial noise values of the basic watermark are transformed to the same representation as the video content in the MPEG stream. To this end, the 128×128 basic watermark pattern is likewise divided into 8x8 blocks, one of which is denoted **220** in Fig. 2B. The blocks are discrete cosine-transformed and quantized. Note that the transform and quantizing operation need to be done only once. The DCT coefficients thus calculated are stored in the 128×128 watermark buffer **140** of the arrangement.

The watermark buffer **140** is connected to the VLC processing unit **120,** in which the actual embedding of the watermark takes place. The VLC processing unit decodes (**121**) selected variable-length code words representing the video image into run/level pairs, and converts the run/level pairs into a two-dimensional array of 8×8 DCT coefficients. The watermark is embedded, in a modification stage **123,** by adding to each video block the spatially corresponding watermark block. The watermark block **220** (Fig. 2B) is thus added to the spatially corresponding image block **210** (Fig. 2A). This operation is carried out in the DCT domain. In accordance with a preferred embodiment of the invention, only DCT coefficients that are turned into zero coefficients by this operation are selected for the purpose of watermark embedding. For example, the coefficient having the value 2 in Fig. 3A will be modified only if the corresponding watermark coefficient has the value -2. In mathematical notation:
if cᵢₙ(i,j) + w(i,j) = 0
then cₒᵤₜ(i,j) = 0
else cₒᵤₜ(i,j) = cᵢₙ(i,j)
where cᵢₙ is a coefficient of a video DCT block, w is a coefficient of the spatially corresponding watermark DCT block, and cₒᵤₜ is a coefficient of the watermarked video DCT block. In accordance with a further embodiment, only the signs of the DCT coefficients of the watermark pattern are stored in the watermark buffer **140,** so that the buffer stores +1 and -1 values only. This reduces the memory capacity of the buffer to 1 bit per coefficient (128×128 bits in total). Experiments have shown that it is sufficient to apply watermark embedding to the most significant DCT coefficients only (the most significant coefficients are the ones occurring first in the zigzag scan). This reduces the memory requirements even further. Fig. 3B shows a typical example of a watermark block **320** in the DCT domain, corresponding to noise block **220** in Fig. 2B.

Fig. 3C shows a watermarked video DCT block **330,** obtained by the above-described "addition" of watermark DCT block **320** to video DCT block **310.** It will be appreciated that the number of zero coefficients in the DCT block is increased by this operation. In this specific example, two non-zero coefficients are turned into zero coefficients. They are shaded in Fig. 3C. The new zero coefficients merge into runs of other run/level pairs. Reference numeral **331** in Fig. 3C shows the run/level pairs of the watermarked DCT block **330.** The former run/level pairs (1/-1) and (0/2) have been merged into a new run/level pair (2/2), and former nm/level pairs (2/1) and (7/-1) have been merged into a new nm/level pair (10/-1).

The new run/level pairs are re-encoded. In the arrangement, which is shown in Fig. 1, said re-encoding is performed by a variable-length encoder **124** and a fixed-length encoder **125.** The encoders **124** and **125** comply with the relevant compression standard. In this example, they comply with MPEG's DCT coefficients Table, which defines short variable-length code words for frequently occurring run/level pairs and long fixed-length (24-bits) "Escape codes" for other run/level pairs. Reference numeral **332** in Fig. 3C shows the output of variable-length encoder **124** in response to receipt of nin/level pairs **331.** The watermark embedding process appears to have saved 4 bits, compared with the corresponding input **312** (see Fig. 3A). Similar bit cost reductions may have occurred in previous blocks.

The invention exploits the insight that MPEG's fixed-length "Escape coding" rule may also be applied to run/level pairs having an entry in the variable-length coding table. The fixed-length encoder **125** produces the fixed-length code word for each (or at least each new) run/level pair. A selector **126** selects the variable-length code word produced by encoder **124** or the longer fixed-length code word produced by encoder **125.** The selection is controlled by the bit rate control processor **150.**

Fig. 4 shows a flow chart of operations performed by the bit rate control processor **150.** In a step **401,** the processor keeps track of the cumulative difference DIF between the number of bits in input stream MPᵢₙ and the number of bits in output stream MPₒᵤₜ. The processor also receives the lengths nᵥ of the code words produced by VLC encoder **124,** and knows the lengths n_{f} (here 24) of the code words produced by FLC encoder **125.** As long as the cumulative difference DIF is found to be smaller than n_{f}-nᵥ (in a step **402**), the processor controls selector **126** to select the variable-length code word in a step **403.** If the cumulative difference exceeds n_{f}-nᵥ, the longer fixed-length code word is selected in a step **404.**

Reference numeral **333** in Fig. 3C shows a possible result of this selection process. Selection of the variable-length code word for the new run/level pair (2/2) having length nᵥ=8 causes the cumulative difference to be increased by 1, because the former run/level pairs (1/-1)(0/2) had length 9. Selection of the variable-length code word for the new run/level pair (10/-1) having nᵥ=9 causes the cumulative difference to be increased by 3, because the former run/level pairs (2/1)(7/-1) had length 12. The latter selection brings the cumulative difference in danger of exceeding 15. In response thereto, the processor **150** selects the 24-bit fixed-length code.

The code words thus selected are subsequently applied to the output stage **130,** which provides the watermarked output signal MPₒᵤₜ. Fig. 2C shows the watermarked image. The pixel block denoted **230** in this Figure corresponds to the watermarked video DCT block **330** in Fig. 3C. As has been attempted to express in Fig. 2C, the amount of watermark embedding varies from block to block and from tile to tile.

It is to be noted that it is not necessarily the new run/level pair being created by the watermark embedding process, which is fixed-length encoded. An unmodified run/level pair may be fixed-length encoded as well. Suppose, for example, that the watermark embedding process also turns the last non-zero coefficient of a block (i.e. the coefficient value -1 in Fig. 3A) into a zero coefficient. The respective run/level pair ((7/-1) in Fig. 3A) will then be removed from the bit stream. In that case, it is envisaged to fixed-length encode a former, unmodified, run/level pair (viz. (1/1) in Fig. 3C).

A method and arrangement are disclosed for processing a compressed media signal, for example, embedding a watermark in an MPEG2 video signal. The watermark, a spatial noise pattern (140), is embedded (123) by selectively discarding the smallest quantized DCT coefficients. The discarded coefficients are subsequently merged in the runs of other run/level pairs. To compensate for a too large reduction of the bit rate, some of the new run/level pairs are not variable-length encoded (124) but represented by longer code words according to a further coding rule (125) providing such longer code words, for example, MPEG's "Escape coding".

## Claims

1. A method of processing a compressed media signal in which samples of said media signal are represented by variable-length code words according to a first coding rule, the method comprising the steps of:
- decoding (121) selected variable-length code words into respective selected signal samples;
- modifying (123) said selected signal samples in accordance with a given signal processing algorithm; and
- encoding (124) the modified signal samples into modified variable-length code words according to said first coding rule;
- testing (402) whether said step of encoding decreases the bit rate of the compressed media signal; **characterized in that**, if the result of the testing is affirmative, the method includes the step of re-encoding (125) a signal sample into a longer code word according to a second coding rule.

2. The method as claimed in claim 1, wherein said given signal processing algorithm is embedding a watermark (140) in said compressed media signal.

3. The method as claimed in claim 1, wherein said step of re-encoding a signal sample is applied to the modified signal sample.

4. The method as claimed in claim 1, wherein the selected variable-length code words each represent a run of signal samples having a first value and a contiguous signal sample having a different second value, the step of modifying being applied to said contiguous signal sample.

5. The method as claimed in claim 4, wherein said step of modifying is applied to said contiguous signal sample only if the modified contiguous signal sample assumes the first value by said modification.

6. The method as claimed in claim 5, wherein the step of re-encoding comprises the steps of merging the modified contiguous signal sample with a succeeding or preceding run of signal samples to obtain a new run of signal samples, and encoding the new run of signal samples and a further contiguous signal value sample having the second into a new variable-lengih code word according to the first coding rule.

7. The method as claimed in claim 4, wherein the first value is zero and the, signal samples qualified for modification are signal samples having the sinallest non-zero value.

8. The method as claimed in claim 1, wherein the media signal is divided into sections and the number of modified contiguous signal samples is limited to a predetamined maximum per section.

9. An arrangement for processing a compressed media signal in which samples of said media signal are represented by variable-length code words according to a first coding rule, the arrangement comprising:
- a decoder (121) for decoding selected variable-length code words into respective selected signal samples;
- means (123) for modifying said selected signal samples in accordance with a given signal processing algorithm; and
- an encoder (124) for encoding the modified signal samples into modified variable-length code words according to said first coding rule;
- processing means (150) for testing (402) whether said encoding (124) decreases the bit rate of the compressed media signal, **characterized in that**, if said encoding (124) indeed decreases the bit rate, the processing means (550) are adapted to control said encoder to re-encode (125) a signal sample into a longer code word according to a second coding rule.

## Revendications

1. Procédé de traitement d'un signal multimédia comprimé dans lequel des échantillons dudit signal multimédia sont représentés par des mots de code de longueur variable selon une première règle de codage, le procédé comprenant les étapes de :
- décodage (121) de mots de code de longueur variable sélectionnés en des échantillons de signal sélectionnés respectifs ;
- modification (123) desdits échantillons de signal sélectionnés selon un algorithme de traitement de signal donné ; et
- codage (124) des échantillons de signal modifiés en des mots de code de longueur variable modifiés selon ladite première règle de codage ;
- test (402) pour déterminer si ladite étape de codage réduit le débit binaire du signal multimédia comprimé ;
- **caractérisé en ce que**, si le résultat du test est affirmatif, le procédé comprend les étapes de :
- recodage (125) d'un échantillon de signal en un mot de code plus long selon une seconde règle de codage.

2. Procédé selon la revendication 1, **caractérisé en ce que** ledit algorithme de traitement de signal donné intègre un filigrane (140) dans ledit signal multimédia comprimé.

3. Procédé selon la revendication 1, **caractérisé en ce que** ladite étape de recodage d'un échantillon de signal est appliquée à l'échantillon de signal modifié.

4. Procédé selon la revendication 1, **caractérisé en ce que** les mots de code de longueur variable sélectionnés représentent chacun une plage d'échantillons de signal ayant une première valeur et un échantillon de signal contigu ayant une seconde valeur différente, l'étape de modification étant appliquée audit échantillon de signal contigu.

5. Procédé selon la revendication 4, dans lequel ladite étape de modification n'est appliquée audit échantillon de signal contigu que si l'échantillon de signal contigu modifié acquiert la première valeur du fait de ladite modification.

6. Procédé selon la revendication 5, dans lequel l'étape de recodage comprend les étapes de fusionnement de l'échantillon de signal contigu modifié avec une plage suivante ou précédente d'échantillons de signal pour obtenir une nouvelle plage d'échantillons de signal, et de codage de la nouvelle plage d'échantillons de signal et d'un échantillon de valeur de signal supplémentaire contigu ayant la seconde valeur en un nouveau mot de code de longueur variable selon la première règle de codage.

7. Procédé selon la revendication 4, **caractérisé en ce que** la première valeur est nulle et **en ce que** les échantillons de signal qualifiés pour la modification sont des échantillons de signal ayant la valeur non nulle la plus petite.

8. Procédé selon la revendication 1, **caractérisé en ce que** le signal multimédia est divisé en sections et **en ce que** le nombre d'échantillons de signal contigus modifiés est limité à un maximum prédéterminé par section.

9. Montage pour traiter un signal multimédia comprimé dans lequel des échantillons dudit signal multimédia sont représentés par des mots de code de longueur variable selon une première règle de codage, le dispositif comprenant :
- un décodeur (121) pour décoder des mots de code de longueur variable sélectionnés en des échantillons de signal sélectionnés respectifs ;
- des moyens (123) pour modifier lesdits échantillons de signal sélectionnés selon un algorithme de traitement de signal donné ; et
- un codeur (124) pour coder les échantillons de signal modifiés en des mots de code de longueur variable modifiés selon ladite première règle de codage ;
- des moyens de traitement (150) pour tester (402) si ledit codage (124) réduit le débit binaire du signal multimédia comprimé, **caractérisé en ce que**, si ledit codage (124) réduit effectivement le débit binaire, les moyens de traitement (150) sont aptes à commander ledit codeur pour recoder (125) un échantillon de signal en un mot de code plus long selon une seconde règle de codage.

## Patentansprüche

1. Verfahren zum Verarbeiten eines komprimierten Mediensignals, wobei Abtastwerte des genannten Mediensignals durch Codewörter variabler Länge entsprechend einer ersten Codierungsregel dargestellt werden, wobei dieses Verfahren die nachfolgenden Verfahrensschritte umfasst:
- das Decodieren (121) selektierter Codewörter variabler Länge zu betreffenden selektierten Signalabtastwerten;
- das Modifizieren (123) der genannten selektierten Signalabtastwerte entsprechend einem bestimmten Signalverarbeitungsalgorithmus; und
- das Codieren (124) der modifizierten Signalabtastwerte zu modifizierten Codewörtern variabler Länge entsprechend der genannten ersten Codierungsregel;
- das Testen (402) ob der genannte Schritt der Codierung die Bitrate des komprimierten Mediensignals verringert;
**dadurch gekennzeichnet, dass** wenn das Ergebnis des Testes positiv ist, das Verfahren den Schritt aufweist von Neucodierung (125) eines Signalabtastwertes zu einem längeren Codewort nach einer zweiten Codierungsregel.

2. Verfahren nach Anspruch 1, wobei der genannte Signalverarbeitungsalgorithmus ein Wasserzeichen (140) in das komprimierte Mediensignal einbettet.

3. Verfahren nach Anspruch 1, wobei der genannte Schritt der Neucodierung eines Signalabtastwertes auf den modifizierten Signalabtastwert angewandt wird.

4. Verfahren nach Anspruch 1, wobei die selektierten Codewörter variabler Länge je einen Lauf von Signalabtastwerten mit einem ersten Wert und eines angrenzenden Signalabtastwertes mit einem anderen zweiten Wert darstellen, wobei der Schritt der Modifikation auf den genannten benachbarten Signalabtastwert angewandt wird.

5. Verfahren nach Anspruch 4, wobei der genannte Schritt der Modifikation auf den genannten angrenzenden Signalabtastwert nur dann angewandt wird, wenn der modifizierte benachbarte Signalabtastwert der ersten Wert durch die genannte Modifikation annimmt.

6. Verfahren nach Anspruch 5, wobei der Schritt der Neucodierung die Schritte der Mischung des modifizierten benachbarten Signalabtastwertes mit einem nachfolgenden oder vorhergehenden Lauf von Signalabtastwerten umfasst, und zwar zum Erhalten eines neuen Laufs von Signalabtastwerten, und das Codieren des neuen Laufes von Signalabtastwerten und eines weiteren angrenzenden Signalabtastwertes mit dem zweiten zu einem neuen Codewort variabler Länge nach der ersten Codierungsregel.

7. Verfahren nach Anspruch 4, wobei der erste Wert Null ist und die Signalabtastwerte, die zur Modifikation qualifiziert sind, Signalabtastwerte mit dem kleinsten Nicht-Nullwert sind.

8. Verfahren nach Anspruch 1, wobei das Mediensignal in Teile aufgeteilt wird und die Anzahl modifizierter angrenzender Signalabtastwerte auf ein vorbestimmtes Maximum je Teil begrenzt ist.

9. Anordnung zum Verarbeiten eines komprimierten Mediensignals, wobei Abtastwerte des genannten Mediensignals durch Codewörter variabler Länge nach einer ersten Codierungsregel dargestellt werden, wobei die Anordnung die nachfolgenden Elemente aufweist:
- einen Decoder (121) zum Decodieren selektierter Codewörter variabler Länge zu betreffenden selektierten Signalabtastwerten;
- Mittel (123) zum Modifizieren der genannten selektierten Signalabtastwerte entsprechend einem bestimmten Signalverarbeitungsalgorithmus; und
- einen Codierer (124) zum Codieren der modifizierten Signalabtastwerte zu modifizierten Codewörtern variabler Länge entsprechend der genannten ersten Codierungsregel;
- Verarbeitungsmittel (150) zum Testen ob die genannte Codierung (124) die Bitrate des komprimierten Mediensignals verringert;
**dadurch gekennzeichnet, dass** wenn die genannte Codierung (124) tatsächlich die Bitrate verringert die Verarbeitungsmittel (150) dazu vorgesehen sind, den genannten Codierer steuern zur Neucodierung (125) eines Signalabtastwertes zu einem längeren Codewort nach einer zweiten Codierungsregel.
